# EUROPEAN PATENT SPECIFICATION

(11) **EP 2 941 023 B1**
(45) Date of publication and mention of the grant of the patent: **04.12.2019**
(21) Application number: 15163901.0
(22) Date of filing: 16.04.2015
(51) Int. Cl.: H04W 4/02

(54) **PROXIMITY DETECTION OF CANDIDATE COMPANION DISPLAY DEVICE IN SAME ROOM AS PRIMARY DISPLAY USING CAMERA**
NÄHERUNGSERKENNUNG EINER KANDIDATENGEFÄHRTENANZEIGEVORRICHTUNG IN DEMSELBEN RAUM ALS PRIMÄRANZEIGE MITTELS KAMERA
DÉTECTION DE PROXIMITÉ DE DISPOSITIF D'AFFICHAGE D'UN COMPAGNON CANDIDAT DANS LA MÊME PIÈCE QU'UN AFFICHAGE PRIMAIRE À L'AIDE D'UNE CAMÉRA

(30) Priority: 29.04.2014 US 201414264435
(43) Date of publication of application: 04.11.2015
(73) Proprietor: Sony Corporation, Tokyo 108-0075 (JP)
(72) Inventor: Candelore, Brant, San Diego, CA California 92128 (US)
(74) Representative: D Young & Co LLP

(56) References cited:
- EP-A1- 2 387 202
- EP-A1- 2 632 190
- US-A1- 2009 319 181
- US-A1- 2012 272 158

## Description

The application relates generally but not exclusively to determining that a candidate companion display device is in the same room as a primary display using a camera.

A computer ecosystem, or digital ecosystem, is an adaptive and distributed socio-technical system that is characterized by its sustainability, self-organization, and scalability. Inspired by environmental ecosystems, which consist of biotic and abiotic components that interact through nutrient cycles and energy flows, complete computer ecosystems consist of hardware, software, and services that in some cases may be provided by one company, such as Sony. The goal of each computer ecosystem is to provide consumers with everything that may be desired, at least in part services and/or software that may be exchanged via the Internet. Moreover, interconnectedness and sharing among elements of an ecosystem, such as applications within a computing cloud, provides consumers with increased capability to organize and access data and presents itself as the future characteristic of efficient integrative ecosystems.

Two general types of computer ecosystems exist: vertical and horizontal computer ecosystems. In the vertical approach, virtually all aspects of the ecosystem are owned and controlled by one company, and are specifically designed to seamlessly interact with one another. Horizontal ecosystems, one the other hand, integrate aspects such as hardware and software that are created by other entities into one unified ecosystem. The horizontal approach allows for greater variety of input from consumers and manufactures, increasing the capacity for novel innovations and adaptations to changing demands.

An example ecosystem that is pertinent here is a home entertainment ecosystem that includes a TV and various nearby display devices such as wireless communication devices.

As understood herein, to pair the TV with a device in the home ecosystem for use as a "companion" device to the TV, typically a user must select a device from a long list of ecosystem devices, in the home and in many cases those in neighboring homes, which might have been discovered wirelessly. Usually, it is up to the user (a human) to figure out which devices are in the home let alone the same room.

Present principles are directed to allowing a primary display device (PDD) such as an audio video display device (AVDD) such as a TV to discover candidate companion screen devices (CCSD), e.g., tablet computers, wireless telephones, and the like that are not just present in the home ecosystem but that also are in the same room as the PDD. This promotes intelligently selecting which one of multiple CCSDs to select for presenting ancillary content related to primary content being shown on the PDD, as CCSDs outside the room in which the PDD is located are not as useful or even desirable to show ancillary content when the user of the outside-the-room device cannot see the PDD. The PDD can send a CCSD in the same room as the PDD a message about whether the user desires to have ancillary data presented on the CCSD.

It should be noted that the PDD may be established by a device with a relatively small display such as a wireless tablet, if it is the device of focus with content that is playing. In this scenario, the CCSD may be established by, for example, a larger screen TV without affecting present principles. EP 2 632 190 A1, US 2012/272158 A1, EP 2 387 202 A1 and US 2009/319181 A1 all describe prior art devices.

Accordingly, a device is provided according to claim 1 and a method is provided according to claim 6.

In examples, the processor when executing the instructions is configured for commanding the CCSD to illuminate a lamp and/or emit a sonic chirp, and only if the device detects the lamp to be illuminated or detects the chirp, causing ancillary content related to primary content presentable on the device to be provided to the CCSD for presentation of the ancillary content thereon, and/or causing a message regarding accessing ancillary content to be provided to the CCSD for presentation of the message thereon.

In examples, the processor when executing the instructions is configured for removing a first network device from a network device discovery list presented on the device responsive to a determination that the first network device has not been imaged.

In another aspect, a method includes imaging space in front of a display device, and executing image recognition on objects in the space. Based at least in part on the image recognition, the method determines whether at least one object is a candidate companion screen device (CCSD). Responsive at least in part to determining that at least one object is a CCSD, a companion screen activity is undertaken.

In another aspect, a device includes at least one computer readable storage medium bearing instructions executable by a processor, and at least one processor configured for accessing the computer readable storage medium to execute the instructions to configure the processor for locating a candidate companion screen device as being in the same room as the primary device using a camera and image recognition. In response to locating the companion screen device as being in the same room as the primary device, the processor when executing the instructions is configured for causing ancillary content related to content being shown on the primary display device to be provided to the companion screen device (CSD).

Various respective aspects and features of the invention are defined in the appended claims. Combinations of features from the dependent claims may be combined with features of the independent claims as appropriate and not merely as explicitly set out in the claims.

Embodiments of the invention will now be described with reference to the accompanying drawings, throughout which like parts are referred to by like references, and in which:
Figure 1 is a block diagram of an example system including an example in accordance with present principles;
Figures 2 and 3 are flow charts showing example algorithms according to present principles; and
Figures 4-6 are example screen shots according to present principles.

This disclosure relates generally to computer ecosystems including aspects of consumer electronics (CE) device based user information in computer ecosystems. A system herein may include server and client components, connected over a network such that data may be exchanged between the client and server components. The client components may include one or more computing devices including portable televisions (e.g. smart TVs, Internet-enabled TVs), portable computers such as laptops and tablet computers, and other mobile devices including smart phones and additional examples discussed below. These client devices may operate with a variety of operating environments. For example, some of the client computers may employ, as examples, operating systems from Microsoft, or a Unix operating system, or operating systems produced by Apple Computer or Google. These operating environments may be used to execute one or more browsing programs, such as a browser made by Microsoft or Google or Mozilla or other browser program that can access web applications hosted by the Internet servers discussed below.

Servers may include one or more processors executing instructions that configure the servers to receive and transmit data over a network such as the Internet. Or, a client and server can be connected over a local intranet or a virtual private network.

Information may be exchanged over a network between the clients and servers. To this end and for security, servers and/or clients can include firewalls, load balancers, temporary storages, and proxies, and other network infrastructure for reliability and security. One or more servers may form an apparatus that implement methods of providing a secure community such as an online social website to network members.

As used herein, instructions refer to computer-implemented steps for processing information in the system. Instructions can be implemented in software, firmware or hardware and include any type of programmed step undertaken by components of the system.

A processor may be any conventional general purpose single- or multi-chip processor that can execute logic by means of various lines such as address lines, data lines, and control lines and registers and shift registers.

Software modules described by way of the flow charts and user interfaces herein can include various sub-routines, procedures, etc. Without limiting the disclosure, logic stated to be executed by a particular module can be redistributed to other software modules and/or combined together in a single module and/ or made available in a shareable library.

Present principles described herein can be implemented as hardware, software, firmware, or combinations thereof; hence, illustrative components, blocks, modules, circuits, and steps are set forth in terms of their functionality.

Further to what has been alluded to above, logical blocks, modules, and circuits described below can be implemented or performed with a general purpose processor, a digital signal processor (DSP), a field programmable gate array (FPGA) or other programmable logic device such as an application specific integrated circuit (ASIC), discrete gate or transistor logic, discrete hardware components, or any combination thereof designed to perform the functions described herein. A processor can be implemented by a controller or state machine or a combination of computing devices.

The functions and methods described below, when implemented in software, can be written in an appropriate language such as but not limited to C# or C++, and can be stored on or transmitted through a computer-readable storage medium such as a random access memory (RAM), read-only memory (ROM), electrically erasable programmable read-only memory (EEPROM), compact disk read-only memory (CD-ROM) or other optical disk storage such as digital versatile disc (DVD), magnetic disk storage or other magnetic storage devices including removable thumb drives, etc. A connection may establish a computer-readable medium. Such connections can include, as examples, hard-wired cables including fiber optics and coaxial wires and digital subscriber line (DSL) and twisted pair wires. Such connections may include wireless communication connections including infrared and radio.

Components included in one embodiment can be used in other embodiments in any appropriate combination. For example, any of the various components described herein and/or depicted in the Figures may be combined, interchanged or excluded from other embodiments.

"A system having at least one of A, B, and C" (likewise "a system having at least one of A, B, or C" and "a system having at least one of A, B, C") includes systems that have A alone, B alone, C alone, A and B together, A and C together, B and C together, and/or A, B, and C together, etc.

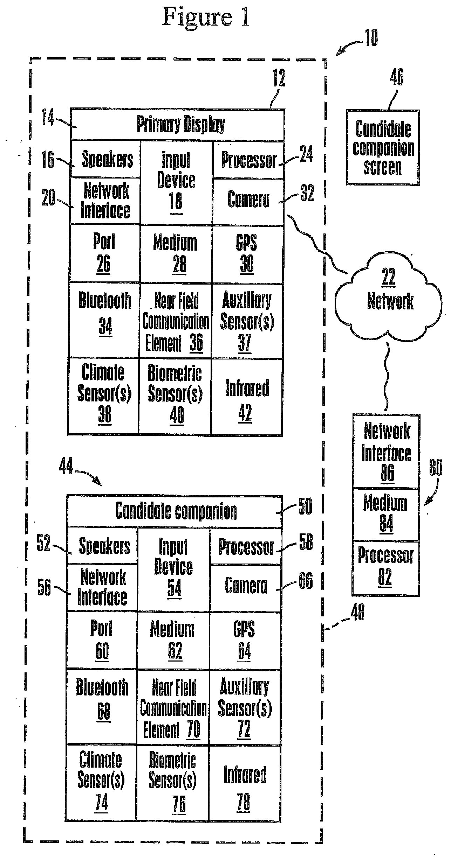

Now specifically referring to Figure 1, an example ecosystem 10 is shown, which may include one or more of the example devices mentioned above and described further below in accordance with present principles. The first of the example devices included in the system 10 is an example primary display device, and in the embodiment shown is an audio video display device (AVDD) 12 such as but not limited to an Internet-enabled TV. Thus, the AVDD 12 alternatively may be an appliance or household item, e.g. computerized Internet enabled refrigerator, washer, or dryer. The AVDD 12 alternatively may also be a computerized Internet enabled ("smart") telephone, a tablet computer, a notebook computer, a wearable computerized device such as e.g. computerized Internet-enabled watch, a computerized Internet-enabled bracelet, other computerized Internet-enabled devices, a computerized Internet-enabled music player, computerized Internet-enabled head phones, a computerized Internet-enabled implantable device such as an implantable skin device, etc. Regardless, it is to be understood that the AVDD 12 is configured to undertake present principles (e.g. communicate with other CE devices to undertake present principles, execute the logic described herein, and perform any other functions and/or operations described herein).

Accordingly, to undertake such principles the AVDD 12 can be established by some or all of the components shown in Figure 1. For example, the AVDD 12 can include one or more displays 14 that may be implemented by a high definition or ultra-high definition flat screen and that may be touch-enabled for receiving user input signals via touches on the display. The AVDD 12 may include one or more speakers 16 for outputting audio in accordance with present principles, and at least one additional input device 18 such as e.g. an audio receiver/microphone for e.g. entering audible commands to the AVDD 12 to control the AVDD 12. The example AVDD 12 may also include one or more network interfaces 20 for communication over at least one network 22 such as the Internet, an WAN, an LAN, etc. under control of one or more processors 24. Thus, the interface 20 may be, without limitation, a Wi-Fi transceiver, which is an example of a wireless computer network interface. It is to be understood that the processor 24 controls the AVDD 12 to undertake present principles, including the other elements of the AVDD 12 described herein such as e.g. controlling the display 14 to present images thereon and receiving input therefrom. Furthermore, note the network interface 20 may be, e.g., a wired or wireless modem or router, or other appropriate interface such as, e.g., a wireless telephony transceiver, or Wi-Fi transceiver as mentioned above, etc.

In addition to the foregoing, the AVDD 12 may also include one or more input ports 26 such as, e.g., a USB port to physically connect (e.g. using a wired connection) to another CE device and/or a headphone port to connect headphones to the AVDD 12 for presentation of audio from the AVDD 12 to a user through the headphones. The AVDD 12 may further include one or more tangible computer readable storage medium 28 such as disk-based or solid state storage. Also in some embodiments, the AVDD 12 can include a position or location receiver such as but not limited to a cellphone receiver, GPS receiver and/or altimeter 30 that is configured to e.g. receive geographic position information from at least one satellite or cellphone tower and provide the information to the processor 24 and/or determine an altitude at which the AVDD 12 is disposed in conjunction with the processor 24. However, it is to be understood that that another suitable position receiver other than a cellphone receiver, GPS receiver and/or altimeter may be used in accordance with present principles to e.g. determine the location of the AVDD 12 in e.g. all three dimensions.

Continuing the description of the AVDD 12, in some embodiments the AVDD 12 may include one or more cameras 32 that may be, e.g., a thermal imaging camera, a digital camera such as a webcam, and/or a camera integrated into the AVDD 12 and controllable by the processor 24 to gather pictures/images and/or video in accordance with present principles. Also included on the AVDD 12 may be a Bluetooth module 34 and other Near Field Communication (NFC) element 36 for communication with other devices using Bluetooth and/or NFC technology, respectively. An example NFC element can be a radio frequency identification (RFID) element. Note that the elements 34, 36, like other appropriate elements herein described, may be incorporated within a housing or chassis of the associated device or be provided as a universal serial bus (USB)2/3 dongle device.

With respect to the Bluetooth module 68, it may be implemented as a Bluetooth Low Energy (BLE) module and/or a Bluetooth 4.0 module that implements communications using either or both of the BLE and standard Bluetooth systems. As understood herein, BLE operates in the same spectrum range (the 2.400 GHz-2.4835 GHz band) as classic Bluetooth technology, but uses a different set of channels. Instead of Bluetooth's seventy nine 1-MHz channels, BLE employ forty 2-MHz channels. BLE sends data within a channel using Gaussian frequency shift modulation with a one megabyte per second data rate and a maximum transmission power of ten milliWatts (10 mW).

Further still, the AVDD 12 may include one or more auxiliary sensors 37 (e.g., a motion sensor such as an accelerometer, gyroscope, cyclometer, or a magnetic sensor, an infrared (IR) sensor, an optical sensor, a speed and/or cadence sensor, a gesture sensor (e.g. for sensing gesture command), etc.) providing input to the processor 24. The AVDD 12 may include still other sensors such as e.g. one or more climate sensors 38 (e.g. barometers, humidity sensors, wind sensors, light sensors, temperature sensors, etc.) and/or one or more biometric sensors 40 providing input to the processor 24. In addition to the foregoing, it is noted that the AVDD 12 may also include an infrared (IR) transmitter and/or IR receiver and/or IR transceiver 42 such as an IR data association (IRDA) device. A battery (not shown) may be provided for powering the AVDD 12.

Still referring to Figure 1, in addition to the AVDD 12, the system 10 may include one or more other CE device types that may establish candidate companion screen devices for the primary display device established by the AVDD 12. In one example, a first candidate companion screen device is established by a first CE device 44 while a second companion screen device may be established by a second CE device 46 which may include similar components as the first CE device 44 and hence will not be discussed in detail. In the example shown, only two CE devices 44, 46 are shown as candidate companion screen devices, it being understood that only one candidate companion screen device or more than two candidate companion screen devices may be used.

In the example shown, to illustrate present principles all three devices 12, 44, 46 are assumed to be members of a home entertainment network in a dwelling or at least to be present in proximity to each other in a location such as a house. However, for illustrating present principles the first CE device 44 is assumed to be in the same room as the AVDD 12, bounded by walls illustrated by dashed lines 48, whereas the second CE device 46, while not being necessarily further from the AVDD 12 as is the first CE device 44 and in fact while potentially being closer to the AVDD 12 than is the first CE device 44, is outside the room bounded by the walls 48.

The example non-limiting first CE device 44 may be established by any one of the above-mentioned devices and accordingly may have one or more of the components described below. Specifically, the first CE device 44 may include one or more displays 50 that may be touch-enabled for receiving user input signals via touches on the display. The first CE device 44 may include one or more speakers 52 for outputting audio in accordance with present principles, and at least one additional input device 54 such as e.g. an audio receiver/microphone for e.g. entering audible commands to the first CE device 44 to control the device 44. The example first CE device 44 may also include one or more network interfaces 56 for communication over the network 22 under control of one or more CE device processors 58. Thus, the interface 56 may be, without limitation, a Wi-Fi transceiver, which is an example of a wireless computer network interface. It is to be understood that the processor 58 controls the first CE device 44 to undertake present principles, including the other elements of the first CE device 44 described herein such as e.g. controlling the display 50 to present images thereon and receiving input therefrom. Furthermore, note the network interface 56 may be, e.g., a wired or wireless modem or router, or other appropriate interface such as, e.g., a wireless telephony transceiver, or Wi-Fi transceiver as mentioned above, etc.

In addition to the foregoing, the first CE device 44 may also include one or more input ports 60 such as, e.g., a USB port to physically connect (e.g. using a wired connection) to another CE device and/or a headphone port to connect headphones to the first CE device 44 for presentation of audio from the first CE device 44 to a user through the headphones. The first CE device 44 may further include one or more tangible computer readable storage medium 62 such as disk-based or solid state storage. Also in some embodiments, the first CE device 44 can include a position or location receiver such as but not limited to a cellphone and/or GPS receiver and/or altimeter 64 that is configured to e.g. receive geographic position information from at least one satellite and/or cell tower, using triangulation, and provide the information to the CE device processor 58 and/or determine an altitude at which the first CE device 44 is disposed in conjunction with the CE device processor 58. However, it is to be understood that that another suitable position receiver other than a cellphone and/or GPS receiver and/or altimeter may be used in accordance with present principles to e.g. determine the location of the first CE device 44 in e.g. all three dimensions.

Continuing the description of the first CE device 44, in some embodiments the first CE device 44 may include one or more cameras 66 that may be, e.g., a thermal imaging camera, a digital camera such as a webcam, and/or a camera integrated into the first CE device 44 and controllable by the CE device processor 58 to gather pictures/images and/or video in accordance with present principles.

Also included on the first CE device 44 may be a Bluetooth module 68 and other Near Field Communication (NFC) element 70 for communication with other devices using Bluetooth and/or NFC technology, respectively. An example NFC element can be a radio frequency identification (RFID) element. The Bluetooth module 68 may be substantially similar in configuration and use to the Bluetooth module 34 of the PDD.

Further still, the first CE device 44 may include one or more auxiliary sensors 72 (e.g., a motion sensor such as an accelerometer, gyroscope, cyclometer, or a magnetic sensor, an infrared (IR) sensor, an optical sensor, a speed and/or cadence sensor, a gesture sensor (e.g. for sensing gesture command), etc.) providing input to the CE device processor 58. The first CE device 44 may include still other sensors such as e.g. one or more climate sensors 74 (e.g. barometers, humidity sensors, wind sensors, light sensors, temperature sensors, etc.) and/or one or more biometric sensors 76 providing input to the CE device processor 58. In addition to the foregoing, it is noted that in some embodiments the first CE device 44 may also include an infrared (IR) transmitter and/or IR receiver and/or IR transceiver 42 such as an IR data association (IRDA) device. A battery (not shown) may be provided for powering the first CE device 44. The second CE device 46 may include some or all of the components shown for the CE device 44.

Now in reference to the afore-mentioned at least one server 80, it includes at least one server processor 82, at least one tangible computer readable storage medium 84 such as disk-based or solid state storage, and at least one network interface 86 that, under control of the server processor 82, allows for communication with the other devices of Figure 1 over the network 22, and indeed may facilitate communication between servers and client devices in accordance with present principles. Note that the network interface 86 may be, e.g., a wired or wireless modem or router, Wi-Fi transceiver, or other appropriate interface such as, e.g., a wireless telephony transceiver.

Accordingly, in some embodiments the server 80 may be an Internet server, and may include and perform "cloud" functions such that the devices of the system 10 may access a "cloud" environment via the server 80 in example embodiments.

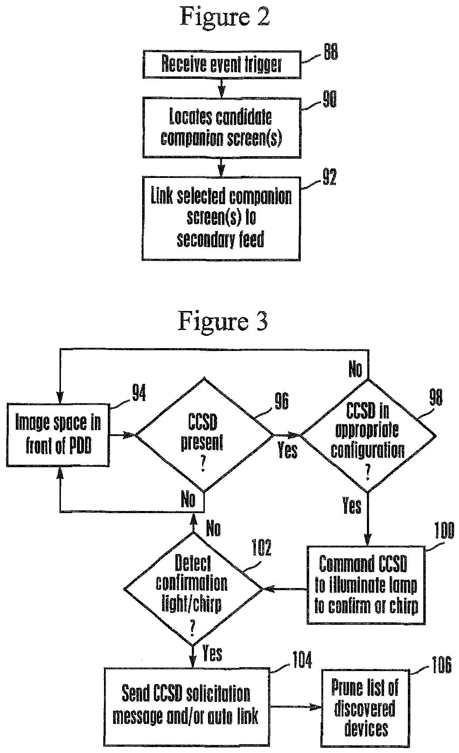

Figure 2 shows overall logic according to present principles. In some examples an event trigger may be received at block 88 to activate the ensuing logic. For example, a particular actor or product or sound may appear or program change in a broadcast channel being presented on the AVDD 12 as indicated by metadata in the program, or by recognition of demanded images by the AVDD processor 24, or by recognition of sounds presented on the AVDD 12 speakers 16 as detected by the microphone 18 and analyzed by the processor 24 either in a standalone mode and/or by uploading the images/sounds to the cloud server 80 for analysis, which sends the analysis results back to the AVDD 12. Or, using detection principles below the AVDD 12 may recognize that a candidate companion device 44 or 46 has been carried into the room in which the AVDD 12 is disposed, using such recognition as a trigger.

In any case, as set forth further below at block 90 the AVDD 12 locates candidate companion screens that are in the same room as the AVDD 12, screening out candidate companion screens that may be nearby but outside the walls 48. At block 92 one or more candidate companion screens that are detected as being in the same room as the AVDD 12 are provided with ancillary feed(s) related to the program being presented on the AVDD 12 by, e.g., linking the companion screen(s) to a computer site associated with the program being presented on the AVDD 12. This linking may entail simply providing a network address or link from the AVDD 12 to the companion screen which a user can select to cause a network browser to access a computer network site on the home network, on the PDD itself, or on the Internet supplying the ancillary feed/content/data (used interchangeably), or the linking may be more automated, e.g., the AVDD may command the companion screen device to automatically access a particular network site and automatically commence downloading the ancillary feed/content/data without any user action to accomplish this.

Note that the logic of Figure 2 may be employed by the CCSD to locate a PDD to which to "throw" content along the lines described above.

Figure 3 illustrates example logic. Typically, the PDD discovers nearby wireless devices on a local network using, for example, universal plug-n-play (UPnUP), "Bonjour", or other device discovery protocol. The trick is to know which of these devices is in the same room as the PDD and thus a fit candidate for use as a companion screen, without forcing the user to sort through a list of networked devices and figure out which one is in the room.

Commencing at block 94, the PDD uses its camera to image space in the vicinity of the PDD. This may be a periodic process, a continuous process, or a process commenced upon a trigger event only, such as but not limited to the example trigger events described above.

If it is determined at decision diamond 96 that a CCSD has been imaged, the logic may move to decision diamond 98 in some optional embodiments to determine whether the CCSD is in an appropriate configuration to be used as a CCSD. For example, if the imaged CCSD is determined to be a clamshell device and is in a closed configuration, the test at decision diamond 98 may be negative, whereas if it is in an open configuration, the test at decision diamond 98 may be positive.

In undertaking the tests at decision diamonds 96 and 98, the executing processor may access a library of image templates for various potential CCSDs, e.g., a library of template images for various models of wireless telephones (arranged by model type if desired), portable computing devices, etc., and objects in the image from the compared to these templates to determine whether an imaged object matches a template. The library may be stored on a cloud server and accessed over the Internet or it may be stored locally to the PDD on PDD data storage devices, or a combination thereof. Upon a match being found, the matching object is considered to be a CCSD. The image templates may include multiple images of individual CCSDs in various configurations to support the test at optional state 98, with each image indicating whether it is of a CCSD configuration appropriate for use as a CCSD or not.

If a CCSD is imaged in the field of view of the PDD, indicating the CCSD is in the same room as the PDD, and assuming, when state 98 is employed, that the CCSD is in an appropriate configuration, the logic may flow to optional confirmation block 100. At confirmation block 100 the PDD may send a Bluetooth or WiFi or other wireless command to the CCSD (recalling that the network address of the CCSD typically has been discovered beforehand) using the network address of the CCSD, commanding the CCSD to illuminate an external lamp on the CCSD, or to transmit an audible chirp that may be detected by the microphone of the PDD. If a correct response is received at decision diamond 102 by, for example, imaging the illumination of a lamp on the CCSD immediately after sending the command, or by detecting an audible chirp, the logic may proceed to block 104. Otherwise, the logic loops back to decision diamond 96 or to block 100 to select another CCSD in the list of discovered devices to command to illuminate a lamp or emit a chirp. When block 100 is omitted the logic may proceed to block 104 from a positive test at state 96 and/or state 98 (when state 98 is used).

At block 104, a message may be sent from the PDD (e.g., through the Bluetooth module or NFC element 36 or network interface or the IR element) to the CCSD (using, for example, the appropriate network address thereof) soliciting use of the CCSD as a companion screen to the PDD. An example of such a message is shown further below. The logic of block 92 in Figure 2 may then be employed if the user of the solicited CCSD accepts the solicitation. Of course, when the logic of Figure 3 is reversed, the discussion of this paragraph likewise is reversed in that the CCSD can solicit the PDD as a companion screen.

Note that if multiple companion screens exist to which to "throw" content, each such companion screen may be solicited or only the companion screen with the largest object size in the camera's field of view may solicited. Or, only companion screens of a PDDD whose image matches a template image of a particular model may be solicited. Or, only CCSDs having a particular orientation may be solicited. For example, a CCSD imaged lying flat and recognized as a notebook computer may not be solicited whereas the same CCSD imaged with its screen portion pivoted away from its keyboard portion may be solicited.

In addition, a companion screen visually identified may be caused (as by command from the "throwing" device) to automatically access a particular network site (as identified, e.g., by metadata accompanying the primary content) and to automatically commence downloading the ancillary feed/content/data without any user action to accomplish this.

In some embodiments, block 106 may be executed to prune the network list of discovered devices presented on the PDD to include only CCSDs determined to have been imaged at block 94. This simplifies the user experience in terms of clearing away clutter from the list and showing only the network devices most likely to be of interest to the user.

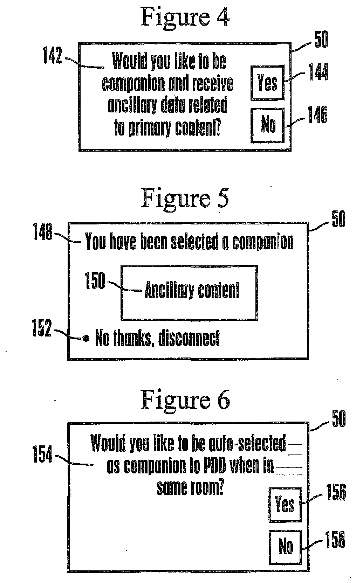

Figure 4 shows an example UI presenting an example solicitation message 142 on a display 50 of a CCSD. A user may select a "yes" selector element 144 to accept the CCSD to be a companion screen to the PDD, in which case the PDD may send a link to the CCSD to a computer site or broadcast site or other site to download ancillary content or provide the ancillary content itself from data that it is receiving but not displaying on the primary display 14. Or, in response to selecting the selector 144 the PDD may automatically cause the CCSD to automatically and without user interaction begin downloading the ancillary content as described above. The user can decline to have the CCSD used as a companion device by selecting a "no" selector element 146.

Figure 5 illustrates a UI that can be presented on a display 50 of a CCSD pursuant to any one of "automatic linking" logic described above. As shown, a message 148 may inform the user of the CCSD that the CCSD has been selected as a companion device, and a window 150 of the display 50 is used to present the ancillary content. A decline selector 152 may be presented which when selected disconnects or otherwise disables, at least temporarily, the CCSD from use as a companion screen to the PDD.

Figure 6 illustrates an example Ul that can be presented on a display 50 of a CCSD in a set-up mode to essentially allow the user to select between the two modes embodied in Figures 5 and 6. A message 154 may be presented asking the user if the user would like the CCSD to be subject to automatic selection as a companion screen to the PDD when the CCSD is in the same room as the PDD. A yes selector 156 enables a user to select this feature, while a no selector 158 enables a user to decline automatic selection of the CCSD as a companion screen.

While the particular PROXIMITY DETECTION OF CANDIDATE COMPANION DISPLAY DEVICE IN SAME ROOM AS PRIMARY DISPLAY USING A CAMERA is herein shown and described in detail, it is to be understood that the subject matter which is encompassed by the present invention is limited only by the claims.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. A device comprising:
at least one computer readable storage medium (28) bearing instructions executable by a processor;
at least one processor (24) configured for accessing the computer readable storage medium to execute the instructions to configure the processor for:
causing the device to image space in front of the device;
executing image recognition on objects in the space;
based at least in part on the image recognition, determining whether at least one object is a candidate companion screen device, CCSD, wherein only companion screen devices having a particular orientation are determined to be CCSDs;
responsive at least in part to determining that at least one object is a CCSD, causing ancillary content related to primary content presentable on the device to be provided to the CCSD for presentation of the ancillary content thereon, and
responsive to determining that at least one object is a CCSD, determining whether the CCSD is in a predetermined configuration, and only if the CCSD is in the predetermined configuration, causing ancillary content related to primary content presentable on the device to be provided to the CCSD for presentation of the ancillary content thereon, and/or causing a message regarding accessing ancillary content to be provided to the CCSD for presentation of the message thereon.

2. The device of Claim 1, wherein the processor when executing the instructions is configured for commanding the CCSD to illuminate a lamp and/or emit a sonic chirp, and only if the device detects the lamp to be illuminated or detects the chirp, causing ancillary content related to primary content presentable on the device to be provided to the CCSD for presentation of the ancillary content thereon, and/or causing a message regarding accessing ancillary content to be provided to the CCSD for presentation of the message thereon.

3. The device of Claim 1, wherein the processor when executing the instructions is configured for causing ancillary content related to primary content presentable on the device to be provided to the CCSD for presentation of the ancillary content thereon.

4. The device of Claim 1, wherein the processor when executing the instructions is configured for causing a message regarding accessing ancillary content to be provided to the CCSD for presentation of the message thereon.

5. The device of Claim 1, wherein the processor when executing the instructions is configured for removing a first network device from a network device discovery list presented on the device responsive to a determination that the first network device has not been imaged.

6. Method comprising:
imaging space in front of a display device;
executing image recognition on objects in the space;
based at least in part on the image recognition, determining whether at least one object is a candidate companion screen device, CCSD, wherein only companion screen devices having a particular orientation are determined to be CCSDs; and
responsive at least in part to determining that at least one object is a CCSD, undertaking a companion screen activity, and
responsive to determining that at least one object is a CCSD, determining whether the CCSD is in a predetermined configuration, and only if the CCSD is in the predetermined configuration, causing ancillary content related to primary content presentable on the device to be provided to the CCSD for presentation of the ancillary content thereon, and/or causing a message regarding accessing ancillary content to be provided to the CCSD for presentation of the message thereon.

7. The method of Claim 6, wherein the companion screen activity includes causing ancillary content related to primary content presentable on the device to be provided to the CCSD for presentation of the ancillary content thereon.

8. The method of Claim 6, wherein the companion screen activity includes causing a message regarding accessing ancillary content to be provided to the CCSD for presentation of the message thereon.

9. The method of Claim 6, comprising commanding the CCSD to illuminate a lamp and/or emit a sonic chirp, and only if the lamp to be illuminated is imaged as being illuminated or the chirp is detected, causing ancillary content related to primary content presentable on the device to be provided to the CCSD for presentation of the ancillary content thereon, and/or causing a message regarding accessing ancillary content to be provided to the CCSD for presentation of the message thereon.

10. The method of Claim 6, comprising removing a first network device from a network device discovery list presented on a device responsive to a determination that the first network device has not been imaged.

## Patentansprüche

1. Vorrichtung, die Folgendes umfasst:
mindestens ein computerlesbares Speichermedium (28), das Anweisungen trägt, die durch einen Prozessor ausführbar sind;
mindestens einen Prozessor (24), der konfiguriert ist, auf das computerlesbare Speichermedium zuzugreifen, um die Anweisungen auszuführen, um den Prozessor zu konfigurieren zum:
Bewirken, dass die Vorrichtung einen Raum vor der Vorrichtung abbildet;
Ausführen einer Bilderkennung an Objekten in dem Raum;
Bestimmen zumindest teilweise anhand der Bilderkennung, ob mindestens ein Objekt eine Kandidatenbegleitbildschirmvorrichtung, CCSD, ist, wobei nur von Begleitbildschirmvorrichtungen mit einer bestimmten Ausrichtung bestimmt wird, dass sie CCSDs sind;
Bewirken zumindest teilweise als Reaktion auf das Bestimmen, dass mindestens ein Objekt eine CCSD ist, dass zusätzlicher Inhalt bezüglich eines primären Inhalts, der auf der Vorrichtung darstellbar ist, an die CCSD für eine Darstellung des zusätzlichen Inhalts auf ihr geliefert wird, und
Bestimmen als Reaktion auf das Bestimmen, dass mindestens ein Objekt eine CCSD ist, ob die CCSD in einer vorbestimmten Konfiguration ist, und nur dann, wenn die CCSD in der vorbestimmten Konfiguration ist, Bewirken, dass zusätzlicher Inhalt bezüglich eines primären Inhalts, der auf der Vorrichtung darstellbar ist, an die CCSD für eine Darstellung des zusätzlichen Inhalts auf ihr geliefert wird, und/oder Bewirken, dass eine Nachricht bezüglich des Zugreifens auf zusätzlichen Inhalt an die CCSD für eine Darstellung der Nachricht auf ihr geliefert wird.

2. Vorrichtung nach Anspruch 1, wobei der Prozessor dann, wenn er die Anweisungen ausführt, konfiguriert ist, der CCSD zu befehlen, eine Leuchte einzuschalten und/oder ein akustisches Gezwitscher auszusenden, und nur dann, wenn die Vorrichtung detektiert, dass die Leuchte eingeschaltet ist, oder das Gezwitscher detektiert, zu bewirken, dass zusätzlicher Inhalt bezüglich des primären Inhalts, der auf der Vorrichtung darstellbar ist, an die CCSD für eine Darstellung des zusätzlichen Inhalts auf ihr geliefert wird, und/oder zu bewirken, dass eine Nachricht bezüglich des Zugreifens auf den zusätzlichen Inhalt an die CCSD für eine Darstellung der Nachricht auf ihr geliefert wird.

3. Vorrichtung nach Anspruch 1, wobei der Prozessor dann, wenn er die Anweisungen ausführt, konfiguriert ist, zu bewirken, dass zusätzlicher Inhalt bezüglich des primären Inhalts, der auf der Vorrichtung darstellbar ist, an die CCSD für eine Darstellung des zusätzlichen Inhalts auf ihr geliefert wird.

4. Vorrichtung nach Anspruch 1, wobei der Prozessor dann, wenn er die Anweisungen ausführt, konfiguriert ist, zu bewirken, dass eine Nachricht bezüglich des Zugreifens auf den zusätzlichen Inhalt an die CCSD für eine Darstellung der Nachricht auf ihr geliefert wird.

5. Vorrichtung nach Anspruch 1, wobei der Prozessor dann, wenn er die Anweisungen ausführt, konfiguriert ist, eine erste Netzvorrichtung von einer Netzvorrichtungsauffindungsliste, die auf der Vorrichtung dargestellt wird, als Reaktion auf eine Bestimmung, dass die erste Netzvorrichtung nicht abgebildet wurde, zu entfernen.

6. Verfahren, das Folgendes umfasst:
Abbilden eines Raums vor einer Anzeigevorrichtung;
Ausführen einer Bilderkennung an Objekten in dem Raum;
Bestimmen zumindest teilweise anhand der Bilderkennung, ob mindestens ein Objekt eine Kandidatenbegleitbildschirmvorrichtung, CCSD, ist, wobei nur von Begleitbildschirmvorrichtungen mit einer bestimmten Ausrichtung bestimmt wird, dass sie CCSDs sind;
Vornehmen zumindest teilweise als Reaktion auf das Bestimmen, dass mindestens ein Objekt eine CCSD ist, einer Begleitbildschirmaktivität, und
Bestimmen als Reaktion auf das Bestimmen, dass mindestens ein Objekt eine CCSD ist, ob die CCSD in einer vorbestimmten Konfiguration ist, und nur dann, wenn die CCSD in der vorbestimmten Konfiguration ist, Bewirken, dass zusätzlicher Inhalt bezüglich eines primären Inhalts, der auf der Vorrichtung darstellbar ist, an die CCSD für eine Darstellung des zusätzlichen Inhalts auf ihr geliefert wird, und/oder Bewirken, dass eine Nachricht bezüglich des Zugreifens auf zusätzlichen Inhalt an die CCSD für eine Darstellung der Nachricht auf ihr geliefert wird.

7. Verfahren nach Anspruch 6, wobei die Begleitbildschirmaktivität enthält, zu bewirken, dass zusätzlicher Inhalt bezüglich des primären Inhalts, der auf der Vorrichtung darstellbar ist, an die CCSD für eine Darstellung des zusätzlichen Inhalts auf ihr geliefert wird.

8. Verfahren nach Anspruch 6, wobei die Begleitbildschirmaktivität enthält, zu bewirken, dass eine Nachricht bezüglich des Zugreifens auf zusätzlichen Inhalt an die CCSD für eine Darstellung der Nachricht auf ihr geliefert wird.

9. Verfahren nach Anspruch 6, das umfasst, der CCSD zu befehlen, eine Leuchte einzuschalten und/oder ein akustisches Gezwitscher auszusenden, und nur dann, wenn die einzuschaltende Leuchte als eingeschaltet abgebildet wird, oder das Gezwitscher detektiert wird, zu bewirken, dass zusätzlicher Inhalt bezüglich des primären Inhalts, der auf der Vorrichtung darstellbar ist, an die CCSD für eine Darstellung des zusätzlichen Inhalts auf ihr geliefert wird, und/oder zu bewirken, dass eine Nachricht bezüglich des Zugreifens auf den zusätzlichen Inhalt an die CCSD für eine Darstellung der Nachricht auf ihr geliefert wird.

10. Verfahren nach Anspruch 6, das umfasst, eine erste Netzvorrichtung von einer Netzvorrichtungsauffindungsliste, die auf einer Vorrichtung dargestellt wird, als Reaktion auf eine Bestimmung, dass die erste Netzvorrichtung nicht abgebildet wurde, zu entfernen.

## Revendications

1. Dispositif, comprenant :
au moins un support d'enregistrement (28) lisible par ordinateur portant des instructions exécutables par un processeur ;
au moins un processeur (24) configuré pour accéder au support d'enregistrement lisible par ordinateur pour exécuter les instructions afin de configurer le processeur pour :
commander au dispositif d'imager un espace au-devant du dispositif ;
exécuter une reconnaissance d'image sur des objets dans l'espace ;
sur la base au moins en partie de la reconnaissance d'image, déterminer si au moins un objet constitue ou non un dispositif à écran compagnon candidat, noté CCSD, seuls des dispositifs à écran compagnon dotés d'une orientation particulière étant déterminés comme constituant des CCSD ;
en réponse au moins en partie à la détermination qu'au moins un objet constitue un CCSD, commander la fourniture d'un contenu auxiliaire lié à un contenu principal présentable sur le dispositif au CCSD en vue d'y présenter le contenu auxiliaire, et
en réponse à la détermination qu'au moins un objet constitue un CCSD, déterminer si le CCSD se trouve ou non dans une configuration prédéterminée et, uniquement si le CCSD se trouve dans la configuration prédéterminée, commander la fourniture d'un contenu auxiliaire lié à un contenu principal présentable sur le dispositif au CCSD en vue d'y présenter le contenu auxiliaire, et/ou commander la fourniture d'un message concernant l'accès à un contenu auxiliaire au CCSD en vue d'y présenter le message.

2. Dispositif selon la revendication 1, dans lequel le processeur, lorsqu'il exécute les instructions, est configuré pour donner l'ordre au CCSD d'allumer un voyant et/ou d'émettre un bip sonore et, uniquement si le dispositif détecte l'allumage du voyant ou détecte le bip, commander la fourniture d'un contenu auxiliaire lié à un contenu principal présentable sur le dispositif au CCSD en vue d'y présenter le contenu auxiliaire, et/ou commander la fourniture d'un message concernant l'accès à un contenu auxiliaire au CCSD en vue d'y présenter le message.

3. Dispositif selon la revendication 1, dans lequel le processeur, lorsqu'il exécute les instructions, est configuré pour commander la fourniture d'un contenu auxiliaire lié à un contenu principal présentable sur le dispositif au CCSD en vue d'y présenter le contenu auxiliaire.

4. Dispositif selon la revendication 1, dans lequel le processeur, lorsqu'il exécute les instructions, est configuré pour commander la fourniture d'un message concernant l'accès à un contenu auxiliaire au CCSD en vue d'y présenter le message.

5. Dispositif selon la revendication 1, dans lequel le processeur, lorsqu'il exécute les instructions, est configuré pour supprimer un premier dispositif de réseau d'une liste de découverte de dispositifs de réseau présentée sur le dispositif en réponse à une détermination que le premier dispositif de réseau n'a pas été imagé.

6. Procédé, comprenant :
l'imagerie d'un espace au-devant d'un dispositif d'affichage ;
l'exécution d'une reconnaissance d'image sur des objets dans l'espace ;
sur la base au moins en partie de la reconnaissance d'image, la détermination si au moins un objet constitue ou non un dispositif à écran compagnon candidat, noté CCSD, seuls des dispositifs à écran compagnon dotés d'une orientation particulière étant déterminés comme constituant des CCSD ; et
en réponse au moins en partie à la détermination qu'au moins un objet constitue un CCSD, la réalisation d'une activité d'écran compagnon, et
en réponse à la détermination qu'au moins un objet constitue un CCSD, la détermination si le CCSD se trouve ou non dans une configuration prédéterminée et, uniquement si le CCSD se trouve dans la configuration prédéterminée, la commande de la fourniture d'un contenu auxiliaire lié à un contenu principal présentable sur le dispositif au CCSD en vue d'y présenter le contenu auxiliaire, et/ou la commande de la fourniture d'un message concernant l'accès à un contenu auxiliaire au CCSD en vue d'y présenter le message.

7. Procédé selon la revendication 6, dans lequel l'activité d'écran compagnon comprend la commande de la fourniture d'un contenu auxiliaire lié à un contenu principal présentable sur le dispositif au CCSD en vue d'y présenter le contenu auxiliaire.

8. Procédé selon la revendication 6, dans lequel l'activité d'écran compagnon comprend la commande de la fourniture d'un message concernant l'accès à un contenu auxiliaire au CCSD en vue d'y présenter le message.

9. Procédé selon la revendication 6, comprenant l'ordre donné au CCSD d'allumer un voyant et/ou d'émettre un bip sonore et, uniquement si le voyant à allumer est imagé comme étant allumé ou le bip est détecté, la commande de la fourniture d'un contenu auxiliaire lié à un contenu principal présentable sur le dispositif au CCSD en vue d'y présenter le contenu auxiliaire, et/ou la commande de la fourniture d'un message concernant l'accès à un contenu auxiliaire au CCSD en vue d'y présenter le message.

10. Procédé selon la revendication 6, comprenant la suppression d'un premier dispositif de réseau d'une liste de découverte de dispositifs de réseau présentée sur un dispositif en réponse à une détermination que le premier dispositif de réseau n'a pas été imagé.
